# EUROPÄISCHE PATENTANMELDUNG

(11) **EP 2 409 823 A2**
(43) Veröffentlichungstag der Anmeldung: **25.01.2012**
(21) Anmeldenummer: 11006075.3
(22) Anmeldetag: 25.07.2011
(51) Int. Cl.: B29C 44/12, B29C 44/56, B29C 33/68, B29C 33/56

(54) **Verfahren und Vorrichtung zum Herstellen eines Dekorteils sowie Dekorteil**

(30) Priorität: 23.07.2010 DE 102010032095
(71) Anmelder: Faurecia Innenraum Systeme GmbH, 76767 Hagenbach (DE)
(72) Erfinder: Lyonnet, Christophe, 67000 Strasbourg (FR); Chevroton, Vincent, 67610 La Wantzenau (FR); Dumazet, Philippe, 67000 Strasbourg (FR)
(74) Vertreter: Schatt, Markus F.

(57) **Zusammenfassung**

Die Erfindung betrifft ein Verfahren zum Herstellen eines Dekorteils (10) mit einer Trägerschicht (12), einer Schaumschicht (14) und einer Dekorschicht (16). Weiter betrifft die vorliegende Erfindung eine Vorrichtung (100) für die Herstellung eines Dekorteils (10) mit einer Trägerschicht (12), einer Schaumschicht (14) und einer Dekorschicht (16) zur Verwendung in einem Fahrzeug sowie ein solches Dekorteil (10). Dabei kann auf die Verwendung einer Schaumschichthaut verzichtet werden, da eine Trennschicht (20) während des Schäumvorgangs zum Einsatz kommt.

## Beschreibung

Diese Patentanmeldung beansprucht den Anmeldetag der deutschen Patentanmeldung DE 10 2010 032 095.1, die am 23.07.2010 eingereicht worden sind. Durch die hiermit vorgenommene Bezugnahme sind die Offenbarungen dieser Patentanmeldungen in der hier vorliegenden Patentanmeldung enthalten.

Die Erfindung betrifft ein Verfahren zum Herstellen eines Dekorteils mit einer Trägerschicht, einer Schaumschicht und einer Dekorschicht. Weiter betrifft die vorliegende Erfindung eine Vorrichtung für die Herstellung eines Dekorteils mit einer Trägerschicht, einer Schaumschicht und einer Dekorschicht zur Verwendung in einem Fahrzeug sowie ein solches Dekorteil.

Beispielsweise zeigt die DE 10 2008 005 778 A1 ein Verfahren zur Herstellung eines Formteilrohlings für die Herstellung von kaschierten Formteilen, bei dem eine Trennschicht durch Einlegen einer Trennfolie aus einem thermoplastischen Kunststoff in das Formwerkzeug aufgebracht wird. Die Folie selber geht dabei eine feste Verbindung mit dem Schaum ein und haftet fest an der Oberfläche des Rohlings.

JP 05-8099531 A betrifft ein Verfahren zur innern Härtung eines elastischen Dämpfermaterials nach dem Spritzgießen, dabei wird ein thermisch aushärtendes Agens flüssig lokal in das Dämpfermaterial injiziert und durch Erhitzen ausgehärtet.

Eine mögliche Aufgabe der vorliegenden Erfindung ist es, die voranstehenden Nachteile bekannter Vorrichtungen und Verfahren zu lösen beseitigen bzw. bekannte Vorrichtungen und Verfahren zu verbessern.

Voranstehende Aufgabe wird gelöst durchdie Merkmale der unabhängigen Ansprüche. Vorteilhafte Ausgestaltungen sind in den auf diese jeweils rückbezogenen Unteransprüchen angegeben. Durch die erfindungsgemäße Lösung wird vermieden, dass bei der Herstellung eines Dekorteils eine Schaumschichthaut, zwischen der und einer Trägerschicht eine Schaumschicht ausgebildet ist, zur Kaschierung des Dekorteils kaschiert werden muss. Nach der Erfindung ist keine Schaumschichthaut vorgesehen, die unlösbar mit der Schaumschicht verbunden ist.

Nach der Erfindung wird eine lösbare Trennschicht verwendet, deren Abmessungen zumindest abschnittsweise den Abmessungen der zu erzeugenden Dekorschicht entsprechen. Die nach der Erfindung verwendete Trennschicht wird so dimensioniert, dass sie bei der Bildung der Schaumschicht quasi als Platzhalter für eine direkte Applizierung der Dekorschicht in derselben Vorrichtung dient. Erst diese Maßnahme ermöglicht es, dieselbe Vorrichtung auch für die abschließende direkte Kaschierung des Formteils mit einer Dekorschicht zu verwenden, was die Notwendigkeit einer weiteren Vorrichtung hierfür vermeidet.

Ein erfindungsgemäßes Verfahren zum Herstellen eines Dekorteils mit einer Trägerschicht, einer Schaumschicht und einer Dekorschicht, weist dabei die folgenden Schritte auf:
■ Anordnen einer Trägerschicht in einem ersten Werkzeugteil einer Werkzeugvorrichtung,
■ Vorsehen einer Trennschicht in einer Trennschichtaufnahme eines zweiten Werkzeugteils der Werkzeugvorrichtung,
■ Schließen der beiden Werkzeugteile der Werkzeugvorrichtung derart, dass sich zwischen der Trennschicht und der Trägerschicht zumindest abschnittsweise eine Kavität ausbildet,
■ Erzeugen einer Schaumschicht in der ausgebildeten Kavität zwischen der Trägerschicht und der Trennschicht mittels einer Schäumvorrichtung, wobei die Materialien der Schaumschicht und der Trennschicht derart ausgebildet sind, dass zwischen der Trennschicht und der Schaumschicht eine lösbare Verbindung ausgebildet wird,
■ Öffnen der beiden Werkzeugteile der Werkzeugvorrichtung.

Erfindungsgemäß sind insbesondere weiterhin die folgenden Schritte vorgesehen:
■ Entnehmen der Trennschicht aus der Trennschichtaufnahme des zweiten Werkzeugs oder Lösen der Trennschicht von der Schaumschicht,
■ Spannen der Dekorschicht zwischen die beiden Werkzeugteile der Werkzeugvorrichtung, und
■ direktes Kaschieren der Schaumschicht mit der Dekorschicht, indem die beiden Werkzeugteile in die geschlossene Position verfahren werden, wobei die Dekorschicht den Platz der Trennschicht, deren Abmessungen zumindest abschnittsweise den Abmessungen der zu erzeugenden Dekorschicht entsprechen, einnimmt

Optional kann auch vorgesehen sein:
■ Entnehmen der Trägerschicht und der Schaumschicht aus der Werkzeugvorrichtung, wobei die Trennschicht in der Trennschichtaufnahme des zweiten Werkzeugs oder lösbar verbunden an der Schaumschicht verbleibt,
■ direktes Kaschieren der Schaumschicht mit der Dekorschicht nach dem Trennen der lösbaren Verbindung zwischen der Trennschicht und der Schaumschicht.
Wie aus den einzelnen Schritten des voranstehend angeführten Verfahrens hervorgeht, ist es bei diesen Verfahrensschritten nicht notwendig, eine Schaumschichthaut zu verwenden. Diese wird sozusagen ersetzt durch das Vorsehen einer Trennschicht in einer Trennschichtaufnahme eines zweiten Werkzeugs einer Werkzeugvorrichtung. Die Trennschichtaufnahme ist grundsätzliche Voraussetzung, um die Trennschicht überhaupt vorsehen zu können. Die Trennschicht selbst hat somit die Funktionalität eines Produktionsmittels, bzw. eine Produktionshilfsmittels, wie dies auch bei der Werkzeugvorrichtung bzw. dessen Werkzeugteilen der Fall ist. Die eingelegte Trennschicht in der Trennschichtaufnahme dient somit zur Unterstützung des Prozesses, insbesondere zum Erzeugen der Schaumschicht. Dabei ist die Trennschicht nicht Teil des Dekorteils sondern vielmehr ein Mittel zum Durchführen des Verfahrens, welches insbesondere reversibel für eine Mehrzahl von Durchgängen des Verfahrens einsetzbar ist.

Der Vorteil gegenüber bekannten Verfahren, insbesondere einem Verfahren mit Verwendung einer Schaumschichthaut, liegt darin, dass die Dicke des herzustellenden Dekorteils um die Dicke der Schaumschichthaut reduziert werden kann. Darüber hinaus können die haptischen Eigenschaften des Dekorteils verbessert werden, da die Schaumschicht seine haptische Charakteristik direkt an die Dekorschicht weitergeben kann. Durch den Verzicht auf die Schaumschichthaut verringert sich darüber hinaus das Gewicht des gesamten Dekorteils, was dem Trend zur Gewichtsreduzierung in Kraftfahrzeugen entspricht. Auch der Platzbedarf und das Transportgewicht wird durch das Überwinden der Verwendung der Schaumschichthaut posittiv beeinflusst. Darüber hinaus fällt das Erfordernis weg, die Schaumschichthaut in einem eigenen Schritt herzustellen, welcher als zusätzlicher Herstellungsschritt das gesamte Verfahren komplexer gestaltet. Durch Reduktion der Dicke des Dekorteils mit den erfindungsgemäßen Lösungen wird erreicht, dass eine bessere Toleranzgenauigkeit der Abmessungen des Dekorteils erreicht wird.

Weiterhin wird durch Vermeiden eines Schritts mit einem Kaschieren der Schaumschichthaut mit der Dekorschicht wird vermieden, dass insbesondere in Randbereichen ein erhöhter Druck auf die Schaumschichthaut und auch damit auf die darunter liegende Schaumschicht ausgeübt wird. Beim Spannen der Dekorschicht während des Kaschiervorgangs kann es somit bei den erfindungsgemäßen Lösungen nicht vorkommen, dass einzelne Abschnitte der Schaumschichthaut, und damit auch der darunter liegenden Schaumschicht, stärker unter Druck stehen als andere Abschnitte. Damit ist es weiterhin auch nicht möglich, dass die Schaumschicht in Abschnitten höheren Drucks stärker komprimiert wird und damit die Dicke des gesamten Dekorteils in Abhängigkeit des unterschiedlichen Drucks variiert.

Durch die erfindungsgemäße Lösung wird insbesondere auch eine gleichmäßige Dicke des Dekorteils erreicht, welche beim Einsatz des Dekorteils in einem Kraftfahrzeug als Qualitätsmangel wahrzunehmen ist.

Die Trennschicht weist dabei die Funktionalität auf, dass sich zwischen derselben und der Schaumschicht eine lösbare Verbindung ausbildet. Diese lösbare Verbindung ist in einfachstem Fall eine Kontaktierung der Oberfläche der Trennschicht mit der Oberfläche der ausgebildeten Schaumschicht. Auch korrespondierende Formen sind möglich, so dass die Trennschicht die Schaumschicht abschnittsweise im dreidimensionalen Raum mit unterschiedlichen Flächen umgibt. Entscheidend für die lösbare Verbindung ist, dass sie ohne Kraftaufwand bzw. mit sehr geringem Kraftaufwand lösbar ist. Unter der lösbaren Verbindung ist somit eine Verbindung zu verstehen, zu deren Lösung eine Kraft notwendig ist, die wesentlich kleiner als die Spannung ist, die zwischen den einzelnen Schichten des Dekorteils am jeweiligen Einsatzort im Dekorteil entstehen können. Aus diesem Merkmal ergibt sich, dass die Trennschicht durch seine Funktionalität überhaupt nicht für den Einsatz am fertigen Dekorteil geeignet ist. Vielmehr hängt von der Größe der notwendigen Kraft zum Lösen der lösbaren Verbindung zwischen der Trennschicht und der Schaumschicht ab, welche der beiden Varianten beim Entnehmen der Trägerschicht vorliegt.

Ist die Lösekraft besonders klein und wird insbesondere allein durch die Schwerkraft, also durch die wirkende Gewichtskraft der Trennschicht und die Ausrichtung der Schaumschicht und der Trennschicht überwunden, so ist es möglich, dass die Trennschicht im Wesentlichen in der Trennschichtaufnahme des zweiten Werkzeugteils verbleibt und beim Entformen der Trägerschicht aus der Werkzeugvorrichtung die Trägerschicht mit der Schaumschicht alleine entformt wird. Für Einsatzsituationen, welche insbesondere hinsichtlich ihrer dreidimensionalen Form eine lösbare Verbindung zwischen Trennschicht und Schaumschicht aufweisen, die eine etwas größere Kraft zum Lösen benötigt, als dies durch die Ausrichtung der Trennschicht und der Schaumschicht und die wirkende Gewichtskraft aufgrund des Gewichts der Trennschicht ausgeübt wird, verbleibt die Trennschicht während des Entformens an der Schaumschicht. Hier muss in einem anschließenden Schritt die lösbare Verbindung getrennt werden, so dass auch in diesem Fall die Schaumschicht und die Trägerschicht alleine für den Kaschierschritt zur Verfügung stehen.

Unabhängig von der tatsächlichen Ausbildung der lösbaren Verbindung zwischen Trennschicht und Schaumschicht erfolgt anschließend ein direktes Kaschieren der Schaumschicht mit der Dekorschicht. Die Dekorschicht kann dabei in unterschiedlicher Weise gestaltet sein und insbesondere aus Leder, bzw. aus Lederimitat hergestellt sein. Auch kann die Dekorschicht selbst mehrschichtig sein, so dass sie auf der einen Seite an den Kaschierprozess der Schaumschicht angepasst ist, während auf der gegenüberliegenden Seite, also auf der im Einsatz des Dekorteils sichtbaren Seite, eine entsprechende Oberfläche mit ansprechender Optik vorgesehen ist. Insbesondere ist die Verwendung von Dekorschichten möglich, die besonders hochwertig und damit besonders empfindlich und daher dem Schäumprozess nicht aussetzbar sind.

Dabei ist es im Rahmen einer vorliegenden Erfindung möglich, dass beim Erzeugen der Schaumschicht bereits eine Verbindung zwischen der Schaumschicht und der Trägerschicht hergestellt ist, welche im Sinne der vorliegenden Erfindung unlösbar ist. Eine solche "unlösbare Verbindung" im Sinne der vorliegenden Erfindung ist zu verstehen als eine Verbindung, die durch Kräfte, wie sie im Einsatz eines durch ein erfindungsgemäß hergestelltes Dekorteil in einem Fahrzeug entstehen, nicht gelöst werden kann. Insbesondere Zug- und Druckkräfte sowie auch Scherkräfte können eine solche unlösbare Verbindung im Sinne der vorliegenden Erfindung nicht lösen, so dass eine für den Einsatz dauerhafte Verbindung bestehen bleibt. Dies kann zum Beispiel dadurch erfolgen, dass beim Einspritzen, also beim Erzeugen der Schaumschicht, eine erhöhte Temperatur der Trägerschicht vorliegt, so dass sich ein Materialschluss und/oder ein Formschluss zur kraftschlüssigen Verbindung, also zur Erzeugung einer unlösbaren Verbindung zwischen Schaumschicht und Trägerschicht, ausbildet. In gleicher Weise kann eine unlösbare Verbindung während des Kaschierens der Schaumschicht mit der Dekorschicht vorgesehen werden. Auch kann hier über erhöhte Temperatur der Kaschierprozess derart gesteuert werden, dass ein Materialschluss und/oder ein Formschluss zur unlösbaren Verbindung der Dekorschicht mit der Schaumschicht erfolgt.

Wie aus der detaillierten Beschreibung des efindungsgemäßen Verfahrens hervorgeht, kann auf diese Weise eine Trennschicht um Einsatz kommen, welche in ihrer Funktionalität die Schaumschichthaut bekannter Verfahren ersetzt, jedoch reversibel in einer Vielzahl von Verfahren weiterverwendet werden kann. Auf diese Weise kann auf die Schaumschichthaut vollständig verzichtet werden, so dass im Vergleich zu bekannten Verfahren und durch bekannte Verfahren hergestellte Dekorteile die erfindungsgemäß hergestellten Dekorteile nicht nur eine geringere Dicke, und damit ein geringeres Gewicht aufweisen, sondern darüber hinaus auch noch kostengünstiger und unter weniger Materialaufwand hergestellt werden können. Auch ist auf diese Weise eine höhere Toleranzgenauigkeit der hergestellten Dekorteile möglich.

Ein erfindungsgemäßes Verfahren kann dahingehend weitergebildet sein, dass ein zusätzlicher Schritt vor dem Kaschieren der Schaumschicht vorgesehen ist, welcher ein wenigstens abschnittsweises Behandeln der Schaumschicht mit einem Härtungsmittel beinhaltet. Ein abschnittsweises Behandeln der Schaumschicht mit einem Härtungsmittel hat zur Folge, dass die mechanische Belastbarkeit der Schaumschicht in diesem behandelten Abschnitt verstärkt wird. Mit anderen Worten erhöht sich die Widerstandskraft der Schaumschicht, so dass diese nur gegen einen erhöhten Kraftaufwand im Vergleich zu einem unbehandelten Abschnitt der Schaumschicht komprimierbar ist. Vorteilhafterweise werden auf diese Weise Abschnitte der Schaumschicht behandelt, welche im Kaschierprozess, der an den Härtungsprozess anschließt, besonders stark belastet werden. Auf diese Weise ist es möglich, die Schaumschicht zu härten und trotz einer variierenden Druckbelastung während des Kaschierprozesses eine im Wesentlichen konstante Dicke des Dekorteils nach der Finalisierung der Kaschierung zu erzeugen.

Als Härtungsmittel kommen Komponenten in Frage, die beispielsweise in die Poren des behandelten Abschnitts der Schaumschicht eindringen und dort aushärtbar sind. Ein aushärten in Poren verstopft diese sozusagen und verringert die Elastizität in diesem Abschnitt. Auf diese Weise wird die Widerstandskraft dieses Abschnitts der Schaumschicht erhöht. Beispielsweise ist dies durch fließfähige und aushärtbare Harze möglich. Auch ist es denkbar, dass eine Art Schutzschicht in Form einer Härteschicht um die Schaumschicht gelegt wird. Diese kann zum Beispiel durch eine chemische Polymerisationsreaktion erzeugt werden und erhöht ebenfalls die Widerstandskraft der Schaumschicht.

Es kann vorteilhaft sein, wenn der Schritt der Behandlung mit dem Härtungsmittel zumindest abschnittsweise bereits vor dem Erzeugen der Schaumschicht durch ein Behandeln der Trennschicht und/oder der Trägerschicht erfolgt. Auf diese Weise ist es möglich, dass eine zusätzliche, anschließende Station zum Behandeln mit Härtungsmittel vor dem Kaschieren mit der Dekorschicht vermieden werden kann. Das Härtungsmittel, welches auf Trennschicht und/oder Trägerschicht aufgebracht wird, zieht vorteilhafterweise durch Kapillarkräfte angesaugt während oder nach dem Schaumprozess, also während oder nach dem Erzeugen der Schaumschicht in diese ein und härtet die entsprechend behandelten Abschnitte aus. Weiter ist es auch möglich, dass Volumen verdrängende Härtungsmittel zu Einsatz kommen. So ist es denkbar, dass ein anderer, härterer Schaum verwendet wird, um die Entsprechenden Abschnitte der Kavität zwischen der Trägerschicht und der Trennschicht auszufüllen. Durch dieses Ausfüllen sind diese Abschnitte sozusagen bereits belegt und können während des Schäumprozesses nicht mehr ausgeschäumt werden. Auf diese Weise entsteht sozusagen eine Schaumschicht mit unterschiedlichen Abschnitten unterschiedlicher Schaummaterialien und damit auch unterschiedlicher Widerstandskräfte.

Unabhängig davon, zu welchem Zeitpunkt und auf welche Weise eine Behandlung mit Härtungsmittel erfolgt, kann es vorteilhaft sein, wenn bei einem erfindungsgemäßen Verfahren der behandelte Abschnitt ein Randabschnitt der Schaumschicht ist. Ein solcher Randabschnitt bezieht sich demnach auf den Rand der Schaumschicht, welcher vorteilhafterweise mit dem Rand des Dekorteils an dessen Außenkante oder einer Kante an einem Durchbruch oder einer Öffnung im Dekorteil zusammenfällt, also bei Dekorteilen, die bis zum entsprechenden Rand der Trägerschicht vollständig mit einer Schaumschicht überzogen sind. Der Randabschnitt der Schaumschicht ist üblicherweise der am stärksten belastete Teil während des Kaschierprozesses, da für die Erzeugung optisch ansprechender Randabschnitte des Dekorteils ein Umbugschritt der Dekorschicht um den Randabschnitt des Dekorteils erfolgt. Dieser Umbugschritt, insbesondere das Befestigen bzw. Fixieren des umgebogenen Abschnitts der Dekorschicht auf der Rückseite der Trägerschicht hat zur Folge, dass dieser Randabschnitt am stärksten in der Schaumschicht auf Druck belastet wird. Bei bekannten Verfahren ist es demnach wahrscheinlich, dass gerade diese Bereiche komprimiert und damit in ihrer Dicke reduziert werden. Im Gegensatz zu den bekannten Verfahren mit der Verwendung einer Schaumschichthaut ist hier eine freiliegende Schaumschicht vorhanden, welche mit einem Härtungsmittel behandelt werden kann. Dies ist bei bekannten Verfahren nicht möglich, da dort die Schaumschichthaut den Zugang zur Schaumschicht selbst verhindert. Auf diese Weise kann durch das Vorsehen und Verwenden einer Trennschicht gemäß dem erfindungsgemäßen Verfahren ein Härten einzelner Abschnitte, insbesondere des Randabschnitts der Schaumschicht erfolgen, so dass das Produktionsergebnis, also das Dekorteil hinsichtlich seiner optischen und haptischen Qualitätsanmutung verbessert ist.

Der Randabschnitt, welcher durch ein Härtungsmittel behandelt wird, erstreckt sich dabei vorteilhafterweise über eine Breite, die im Wesentlichen im Bereich der einfachen bis dreifachen Dicke der Schaumschicht selbst liegt. Selbstverständlich sind auch größere, bzw. kleinere Breiten des Randabschnitts, der mit einem Härtungsmittel behandelt wird, denkbar, wobei für die exakte Spezifizierung der Länge der entsprechende Umbugradius und die daraus resultierende Kraft, bzw. der daraus resultierende Abschnitt erhöhten Drucks in der Schaumschicht ausgewertet werden kann.

Ein erfindungsgemäßes Verfahren kann dahingehend weitergebildet sein, dass die Trennschicht zumindest in den zu der zwischen Trennschicht und Trägerschicht gebildeten Kavität gerichteten Abschnitten wenigstens teilweise aus Silikon besteht. Dieses teilweise Bestehen aus Silikon beinhaltet selbstverständlich auch Kompositmaterialien aus zwei oder mehr Komponenten, die zumindest teilweise Silikon aufweisen. Insbesondere sind dabei additionsvernetzende Kompositmaterialien verwendbar. Auch mehr oder weniger vollständige Silikonabschnitte bzw. eine Trennschicht, die im Wesentlichen vollständig aus Silikon gebildet ist, sind im Rahmen eines erfindungsgemäßen Verfahrens denkbar. Das Vorsehen zumindest abschnittsweise von Silikon in dem erfindungsgemäß definierten Bereich hat den Vorteil, dass diese Abschnitte mit Silikon nach dem Erzeugen der Schaumschicht in der entsprechenden Kavität die Haftung zwischen der Trennschicht und der Schaumschicht reduzieren. Damit wird die notwendige Kraft zu Aufheben der lösbaren Verbindung zwischen Trennschicht und Schaumschicht weiter reduziert. Die Reduktion der Kraft hat zur Folge, dass in vorteilhaften Ausführungsformen beim Herausnehmen, also beim Entformen der Trägerschicht und der Schaumschicht aus der Werkzeugvorrichtung, die Trennschicht mit hoher Wahrscheinlichkeit im zweiten Werkzeugteil der Werkzeugvorrichtung verbleibt. Die Reduktion der notwendigen Lösekraft der lösbaren Verbindung zwischen Schaumschicht und Trennschicht hat somit zur Folge, dass ein zusätzlicher Löseschritt der Trennschicht von der Schaumschicht unterbleiben kann. Dies reduziert zum einen die Produktionskosten durch das Weglassen eines solchen Schritts, und darüber hinaus die Dauer für den Produktionszyklus zum Herstellen des Dekorteils.

Ein erfindungsgemäßes Verfahren kann dadurch weitergebildet sein, dass die verwendete Trennschicht form- und temperaturbeständig ist bis zu einer maximalen Temperatur die mit einem Sicherheitsabstand von mindestens 10°C oberhalb der Prozesstemperatur des Schäumprozesses liegt. Insbesondere korreliert die Temperaturbeständigkeit mit der Prozesstemperatur während des Schäumens, welche insbesondere beim Erzeugen eines material- und/oder formschlüssigen Verbindens zwischen der Schaumschicht und der Trägerschicht erhöht sein kann. Somit liegt die Temperaturbeständigkeit der maximalen Belastungstemperatur vorteilhafterweise oberhalb, insbesondere mit einem Sicherheitsabstand oberhalb der Schäumtemperatur während der Durchführung eines erfindungsgemäßen Verfahrens. Das gleiche gilt für die Formbeständigkeit, insbesondere hinsichtlich der verwendeten Drücke zum Erzeugen der Schaumschicht in der Kavität zwischen Trennschicht und Trägerschicht.

Weiter kann es vorteilhaft sein, wenn bei einem erfindungsgemäßen Verfahren die verwendete Trennschicht zumindest einen Kanal mit zumindest zwei Öffnungen aufweist, wobei wenigstens eine Öffnung den Kanal zu der Kavität zwischen der Trennschicht und der Trägerschicht öffnet und wenigstens eine weitere Öffnung den fluidkommunizierenden Kontakt zwischen dem Kanal der Trennschicht und einem Kanal der Schäumvorrichtung herstellt. Auf diese Weise kann in vorteilhafter Ausgestaltung ein besonders einfaches Erzeugen der Schaumschicht erfolgen. Vorhandene Kanäle in der Werkzeugvorrichtung können mit einer Erzeugungsvorrichtung für Schaum verbunden sein, so dass Schaummaterial durch diese Kanäle in Richtung der Kavität transportiert werden kann. Um in die Kavität zu gelangen, ist es einerseits denkbar, dass diese Kanäle direkt in die Kavität münden, jedoch kann dies problematisch sein, da sich die Kavität vorteilhafterweise im Wesentlichen vollständig abgeschlossen zwischen der Trennschicht und der Trägerschicht befindet. Auch ist es möglich, dass die Kanäle der Schäumvorrichtung in dem ersten Werkzeugteil vorgesehen sind und mit entsprechenden Kanälen in der Trägerschicht korrespondieren, um einen fluidkommunizierende Verbindung mit der Kavität herzustellen. Das Vorsehen von zumindest einem Kanal in der Trennschicht hat jedoch den Vorteil, dass die Kavität im Wesentlichen vollständig abgeschlossen ist und es trotzdem durch Kanäle der Schäumvorrichtung und die korrespondierenden Kanäle in der Trennschicht die Schaumschicht in der Kavität in einfacher Weise erzeugt werden kann. Ein weiterer Vorteil ist es, dass keine Kanäle in der Trägerschicht vorgesehen werden müssen, die schließlich ein Bestandteil der Dekorteils ist.

Die Erzeugung der Schaumschicht kann dabei in unterschiedlicher Weise geschehen. So ist es möglich, dass das Schaummaterial in die Kavität eingespritzt wird und beispielsweise unter der Verwendung von Druckgas oder Treibgas dort ausschäumt. Auch ist es möglich, dass eine mehrkomponentige Materialmischung in die Kavität eingespritzt wird, welche dort, insbesondere unter Einwirkung von Temperatur und/oder Druck mittels einer chemischen Reaktion ausschäumt. Dabei ist die Lage der Kanäle in der Trennschicht wie auch die Lage der Kanäle in der Werkzeugvorrichtung vorteilhafterweise derart ausgestaltet, dass ein vollständiges Ausschäumen der Trennschicht möglich wird. In identischer Weise ausgestaltete Kanäle können vorgesehen sein, um ein Vakuum anzulegen, so dass während des Schaumprozesses die Kavität evakuiert werden kann. Auf diese Weise kann sichergestellt werden, dass möglichst wenige Lufteinschlüsse in der Schaumschicht, also Blasen, welche einen deutlich größeren Durchmesser aufweisen als die durchschnittliche Porengröße des Schaums, in der Schaumschicht verbleiben.

Weiter ist es möglich, dass bei einem erfindungsgemäßen Verfahren die verwendete Trennschicht eine Oberflächenstruktur aufweist, die mit einer gewünschten Oberflächenstruktur auf der Dekorschicht des fertigen Dekorteils korrespondiert. Dabei ist zu beachten, dass die Oberflächenstruktur der Trennschicht eine Negativstruktur in Bezug auf die Korrespondenz der Oberflächenstruktur der Dekorschicht darstellt. Sie erzeugt nämlich eine entsprechend strukturierte Oberfläche der Schaumschicht, welche anschließend direkt mit der Dekorschicht kaschiert wird. Beispielsweise passen sich solche Oberflächenstrukturen der Trennschicht an eine Mikrostruktur und/oder eine Makrostruktur der Dekorschicht an. Unter Mikrostruktur ist dabei beispielsweise eine Narbung der Dekorschicht zu verstehen, welche durch eine entsprechend ausgestaltete Schaumschicht als Folge einer Oberflächenstruktur der Trennschicht in ihrer Haptik und/oder Optik durch die Schaumschicht unterstützt werden kann. Auch das Vorsehen von versteifenden Makrostrukturen in der Oberflächenstruktur der Trennschicht, also beispielsweise Verschwächungsnuten oder Versteifungsrippen, sind auf diese Weise besonders einfach herstellbar.

Nach einem weiteren Aspekt der Erfindung ist insbesondere eine Vorrichtung für die Herstellung eines Dekorteils mit einer Trägerschicht, einer Schaumschicht und einer Dekorschicht zur Verwendung in einem Fahrzeug vorgesehen. Die Vorrichtung weist dabei auf:
■ eine Werkzeugvorrichtung mit zumindest einem ersten Werkzeugteil, das derart ausgestaltet ist, dass darin die Trägerschicht aufgenommen werden kann und zumindest einem zweiten Werkzeugteil, in dem wenigstens eine als Vertiefung geformte Trennschichtaufnahme zur Anordnung einer Trennschicht vorgesehen ist, wobei das erste Werkzeugteil und das zweite Werkzeugteil zueinander bewegbar sind zwischen einer geöffneten Position zum Anordnen der Trägerschicht in dem ersten Werkzeugteil und der Trennschicht in der Trennschichtaufnahme des zweiten Werkzeugteils und einer geschlossenen Position, in welcher zwischen der Trägerschicht und der Trennschicht zumindest abschnittsweise eine Kavität zur Ausbildung der Schaumschicht ausgebildet wird, und
■ eine Schäumvorrichtung, die derart ausgestaltet ist, dass sie bei geschlossener Position der beiden Werkzeugteile der Werkzeugvorrichtung die Schaumschicht in der Kavität erzeugen kann.

Erfindungsgemäß ist dabei insbesondere vorgesehen, dass die Abmessungen der Trennschichtaufnahme derart ausgestaltet sind, dass die Trennschicht aufgenommen werden kann und die Abmessungen der Trennschicht zumindest abschnittsweise den Abmessungen der zu erzeugenden Dekorschicht entsprechen, so dass nach dem Erzeugen der Schaumschicht die Trennschicht entfernt, anschließend zwischen die beiden Werkzeugteile der Werkzeugvorrichtung die Dekorschicht gespannt und mit der Vorrichtung die Schaumschicht direkt kaschiert werden kann, indem die Dekorschicht in der geschlossenen Position der beiden Werkzeugteile den Platz der Trennschicht einnimmt.

Die vorliegende Erfindung betrifft insbesondere eine Vorrichtung für die Herstellung eines Dekorteils mit einer Trägerschicht, einer Schaumschicht und einer Dekorschicht zur Verwendung in einem Fahrzeug. Eine solche Vorrichtung weist eine Werkzeugvorrichtung mit zumindest einem ersten Werkzeugteil auf, das derart ausgestaltet ist, dass darin die Trägerschicht aufgenommen werden kann. Diese Aufnahme bezieht sich in erster Linie auf die geometrischen Abmessungen der Trägerschicht, wobei es ausreicht, wenn zumindest Abschnitte in der Trägerschicht aufgenommen werden. So ist es im einfachsten Fall auch möglich, dass das erste Werkzeugteil eine im Wesentlichen ebene Platte darstellt, welche an eine Außenkontur der Trägerschicht angepasst ist und diese abschnittsweise aufnimmt. Das Aufnehmen kann beispielsweise durch das Vorsehen von Absaugöffnungen verbessert werden, so dass die Trägerschicht an das erste Werkzeugteil zumindest abschnittsweise mittels Vakuum angesaugt werden kann.

Weiter ist bei einer erfindungsgemäßen Vorrichtung zumindest ein zweites Werkzeugteil vorgesehen, in dem wenigstens eine als Vertiefung geformte Trennschichtaufnahme zur Anordnung einer Trennschicht vorgesehen ist. Die Trennschichtaufnahme ist dabei als Vertiefung vorgesehen, so dass vorteilhafterweise das zweite Werkzeugteil bezogen auf die Schwerkraftrichtung das untere Werkzeugteil der Werkzeugvorrichtung darstellen. Auf diese Weise kann die Trennschicht einfach in die Trennschichtaufnahme eingelegt werden und verbleibt dort aufgrund der Ausgestaltung der Trennschichtaufnahme als Vertiefung durch die Schwerkraft in dieser. Die Trennschicht kann dabei in einer Art und Weise ausgestaltet sein, wie dies voranstehend ausführlich zum erfindungsgemäßen Verfahren mit Bezug auf die Trennschicht erläutert worden ist.

Das erste Werkzeugteil und das zweite Werkzeugteil der Werkzeugvorrichtung sind zueinander bewegbar, zwischen einer geöffneten Position zum Anordnen der Trägerschicht in dem ersten Werkzeugteil und der Trennschicht in der Trennschichtaufnahme des zweiten Werkzeugteils und einer geschlossenen Position, in welcher zwischen der Trägerschicht und der Trennschicht zumindest abschnittsweise eine Kavität zur Ausbildung der Schaumschicht ausgebildet wird. Die geöffnete Position ist somit die Bestückungsposition der Werkzeugvorrichtung. In dieser wird sowohl die Trägerschicht als auch die Trennschicht in der gewünschten Position angeordnet. Dabei kann durch entsprechende Ausbildung der Trennschicht das Anordnen der Trennschicht in der Trennschichtaufnahme einmalig erfolgen, da durch Reduktion der Lösekraft bei der lösbaren Verbindung zwischen der Trennschicht und der Schaumschicht die Trennschicht im Anschluss an das Verfahren in der Trennschichtaufnahme verbleibt. Bei einer erfindungsgemäßen Vorrichtung muss somit im geöffneten Zustand bei der wiederholten Durchführung der Herstellung des Dekorteils jeweils immer nur eine Trägerschicht eingelegt werden, da die Trennschicht in der unteren Werkzeugaufnahme, insbesondere in dessen Trennschichtaufnahme verbleibt. Die Kavität ist zur Ausbildung der Schaumschicht ausgebildet und ist in Abhängigkeit der Kontur der Trägerschicht und der Kontur der Trennschicht als Gesamtkontur der zu schäumenden Schaumschicht definiert.

Weiter ist eine Schäumvorrichtung vorgesehen, die derart ausgestaltet ist, dass sie bei geschlossener Position der beiden Werkzeugteile der Werkzeugvorrichtung die Schaumschicht in der Kavität erzeugen kann. Solche Schäumvorrichtungen sind dabei grundsätzlich sowohl in Form von Spritzgussschäumen, beispielsweise unter der Verwendung von Schäumgas, also Treibgas möglich, wie auch unter der Verwendung chemischer Prozesse, die durch chemische Reaktionen, insbesondere unter Einfluss von Druck und/oder Temperaturgas zum Aufschäumen der Schaumschicht Reaktionsgas erzeugen. Die Schäumvorrichtung kann dabei Kanäle und/oder Injektionsnadeln/-öffnungen aufweisen, um die Kavität zu erreichen und dort die Schaumschicht zu erzeigen.

Durch eine erfindungsgemäße Vorrichtung wird eine Vorrichtung zur Verfügung gestellt, mit der ein erfindungsgemäßes Verfahren ausgeführt werden kann. Dementsprechend gelten die zum erfindungsgemäßen Verfahren beschriebenen Vorteile und Ausgestaltungsformen in entsprechender Weise auch für die erfindungsgemäße Vorrichtung. Insbesondere ist es auf diese Weise möglich, mittels einer erfindungsgemäßen Vorrichtung ein Dekorteil herzustellen, bei der eine direkte Kaschierung der Schaumschicht erfolgen kann, so dass auf eine Schaumschichthaut verzichtet werden kann. Daraus ergeben sich insbesondere die Vorteile eines reduzierten Gewichts, einer reduzierten Dicke des Dekorteils und der Reduktion der Prozessschritte sowie der Materialeinsparung und einer höheren Toleranzgenauigkeit. Darüber hinaus kann bei einem derart hergestellten Dekorteil eine verbesserte Haptik erkannt werden, da ein direkter Kontakt zwischen der Dekorschicht und der Schaumschicht hergestellt werden kann.

Insbesondere wird bei der erfindungsgemäßen Vorrichtung die Trennschicht reversibel in der Trennschichtaufnahme des zweiten Werkzeugteils aufgenommen und sind die Abmessungen der Trennschichtaufnahme derart ausgestattet, dass eine Trennschicht aufgenommen werden kann, deren Abmessungen zumindest abschnittsweise den Abmessungen der Dekorschicht entsprechen. Auf diese Weise kann die Trennschicht durch reversible Aufnahme in der Trennschichtaufnahme aus dieser wieder herausgetrennt werden. Dies erfolgt insbesondere nach dem Erzeugen der Schaumschicht, so dass kurz dargestellt der folgende Verfahrensablauf mit einer erfindungsgemäßen Vorrichtung denkbar ist. Nach dem Erzeugen der Schaumschicht wird die Werkzeugvorrichtung, also die beiden Werkzeugteile wieder in die geöffnete Position verfahren. Dabei werden die Trägerschicht und die damit unlösbar verbundene Schaumschicht nach oben bewegt, und die Trennschicht verbleibt entweder in der Trennschichtaufnahme oder lösbar verbunden an der Schaumschicht. Anschließend wird die Trennschicht aus der entsprechenden Position entfernt, so dass die Trennschichtaufnahme leer verbleibt und die Schaumschicht frei liegt. Anschließend wird zwischen die beiden Werkzeugteile der Werkzeugvorrichtung die Dekorschicht gespannt, so dass durch nachfolgendes Schließen der Werkzeugvorrichtung die Dekorschicht den Platz der Trennschicht einnimmt. Durch die Anpassung der Dimensionierung der Trennschicht an die Dekorschicht findet diese an der entsprechenden Position auch genug Platz, so dass der Kaschierprozess bei einer erfindungsgemäßen Vorrichtung identischen Werkzeug wie das Erzeugen der Schaumschicht erfolgen kann. Auf diese Weise kann ein und dasselbe Werkzeug doppelt verwendet werden, so dass zusätzliche Kosten für ein zusätzliches Werkzeug vermieden werden.

Weiter ist es möglich, dass bei einer erfindungsgemäßen Vorrichtung die Schäumvorrichtung zumindest einen Kanal in der Werkzeugvorrichtung und wenigstens eine damit in fluidkommunizierender Verbindung stehende Öffnung für den Transport des Schaummaterials zu der Kavität aufweist. Dabei kann diese Öffnung direkt in die Kavität führen oder aber, wie dies im Rahmen des erfindungsgemäßen Verfahrens erläutert worden ist, durch eine entsprechende Kanalanordnung mit Öffnungen in der Trennschicht selbst. Selbstverständlich können die Kanäle der Schaumvorrichtung auch in dem ersten Werkzeugteil vorgesehen sein und mit Kanälen in der Trägerschicht des Dekorteils korrespondieren, um die fluidkommunizierende Verbindung zu der Kavität herzustellen. Die Schaumerzeugung kann innerhalb der Schäumvorrichtung erfolgen, oder außerhalb von dieser durch einen separaten Schaumerzeuger, der beispielsweise einen Treibgasbehälter beinhaltet. Auch separate Lagerbehälter für unterschiedliche Komponenten eines mehrkomponentigen Schaums, der durch chemische Reaktion erzeugt wird, sind im Rahmen der vorliegenden Erfindung denkbar.

Weiter ist es möglich, dass bei einer erfindungsgemäßen Vorrichtung die Trennschichtaufnahme mit einer Fixiervorrichtung für die reversible Fixierung der Trennschicht in der Trennschichtaufnahme ausgestattet ist. Unter "reversible Fixierung" fallen dabei insbesondere Schnapprastverbindungen oder einfache haftvermittelnde Verbindungen, die jedoch reversibel lösbar sind. So sind neben Schnapprastverbindungen beispielsweise Klettverbindungen oder einfach Klebeverbindungen denkbar, die ein reversibles Fixieren der Trennschicht in der Trennschichtaufnahme ermöglichen.

Insbesondere ist es denkbar, dass bei einer erfindungsgemäßen Vorrichtung die Oberfläche der Trennschichtaufnahme zumindest abschnittsweise derart ausgebildet ist, dass mittels Klebstoff die Trennschicht an dieser Oberfläche reversibel fixiert werden kann und der Klebstoff von dieser Oberfläche wieder entfernbar ist. Auf diese Weise kann ohne baulichen Eingriff in die Trennschichtaufnahme und/oder die Trennschicht eine Fixierung derselben in der Trennschichtaufnahme erfolgen. Darüber hinaus ist die Oberfläche so gestaltet, dass der verwendete Kleber keine Beeinträchtigung der Trennschichtaufnahme und damit des zweiten Werkzeugteils mit sich bringt. Insbesondere wird es auf diese Weise möglich, einen Kleber zur reversiblen Fixierung der Trennschicht in der Trennschichtaufnahme zu verwenden und trotzdem die Werkzeugvorrichtung für einen anschließenden Kaschierschritt mit der Dekorschicht nach entnommener Trennschicht zu verwenden. Der Klebstoff kann dabei insbesondere aufgrund besonders glatter Oberfläche der Trennschichtaufnahme leicht von dieser zu entfernen sein.

Nach einem weitern Aspekt der Erfindung ist ein Dekorteil vorgesehen, das aufweist: eine Trägerschicht, eine mit dieser verbundene Schaumschicht und eine darauf angeordnete Dekorschicht, insbesondere mit einer äußersten Schicht aus Leder oder Lederimitat. Die Dekorschicht ist in den Randabschnitten der Schaumschicht auf die Rückseite der Trägerschicht mittels eines umgebugten Dekorschichtrandabschnitts befestigt, wobei wenigstens ein Randabschnitt der Schaumschicht mit einem Härtungsmittel zum Aufnehmen von Kaschierkräften bei Anbringung eines entsprechenden Abschnitts der Dekorschicht für eine gleichmäßige Dicke des herzustellenden Dekorteils behandelt sind.

Ein weiterer Gegenstand der vorliegenden Erfindung ist ein Dekorteil aufweisend eine Trägerschicht, eine mit dieser verbundene Schaumschicht und eine darauf angeordnete Dekorschicht, wobei in den Randabschnitten der Schaumschicht diese mit einem Härtungsmittel behandelt ist. Mit Bezug auf die entsprechend erläuterten Verfahrensschritte ist ein erfindungsgemäßes Dekorteil insbesondere durch ein erfindungsgemäßes Verfahren oder mittels einer erfindungsgemäßen Vorrichtung herstellbar, da bekannte Dekorteile zwingend eine Schaumschichthaut aufweisen, so dass das Anbringen eines Härtungsmittels, also das Behandeln entsprechender Abschnitte, insbesondere der Randabschnitte der Schaumschicht nicht möglich ist, da dieser von der Schaumschichthaut abgedeckt werden. Ein erfindungsgemäßes Dekorteil hat somit den Vorteil, dass neben dem Verzicht auf eine Schaumschichthaut darüber hinaus eine konstante Dicke des Dekorteils erzielt werden kann, da trotz erhöhten Druckes während des Kaschiervorgangs der Dekorschicht entsprechend hoch belastete Abschnitte, insbesondere die Randabschnitte der Schaumschicht durch die Behandlung mit Härtungsmittel eine höhere Widerstandskraft aufweisen können. Als Härtungsmittel können dabei zum Beispiel Füllmaterialien verwendet sein, die in den Poren der Randabschnitte der Schaumschicht diese füllen und somit der Versteifung dieser Abschnitte dienen. Auch die Randabschnitte umgebende Schutzschichten aus hartem Material sind hier denkbar.

Die vorliegende Erfindung wird näher erläutert anhand der beigefügten Zeichnungsfiguren. Die dabei verwendeten Begriffe "links", "rechts", "oben" und "unten" beziehen sich dabei auf eine Ausrichtung der Zeichnungsfiguren mit normal lesbaren Bezugszeichen. Es zeigen:
- Fig. 1: eine erfindungsgemäße Werkzeugvorrichtung einer ersten Ausführungsform,
- Fig. 2: die Werkzeugvorrichtung von Fig. 1 mit angeordneter Trägerschicht,
- Fig. 3: die Werkzeugvorrichtung der Fig. 1 und 2 mit angeordneter Trennschicht,
- Fig. 4: die Werkzeugvorrichtung der Fig. 1 bis 4 in geschlossener Position,
- Fig. 5: die Werkzeugvorrichtung der Fig. 1 bis 4 mit erzeugter Schaumschicht,
- Fig. 6: die Werkzeugvorrichtung der Fig. 1 bis 5 während des Entformens,
- Fig. 7: ein alternativer Zustand des Entformens im Vergleich zu Fig. 6,
- Fig. 8: die Werkzeugvorrichtung der Fig. 1 bis 7 mit gespannter Dekorschicht,
- Fig. 9: die Werkzeugvorrichtungen der Fig. 1 bis 8 nach einer Variante der Behandlung mit Härtungsmittel,
- Fig. 10: die Werkzeugvorrichtung der Fig. 1 bis 10 während des Kaschierprozesses,
- Fig. 11: ein erfindungsgemäßes Dekorteil,
- Fig. 12: eine Alternative zur Behandlung mit Härtungsmittel,
- Fig. 13A: im Querschnitt ein Ausschnitt während der Anordnung der Trennschicht in der Trennschichtaufnahme,
- Fig. 13B: die Ausführung nach Fig. 13A mit aufgenommener Trennschicht in der Trennschichtaufnahme.

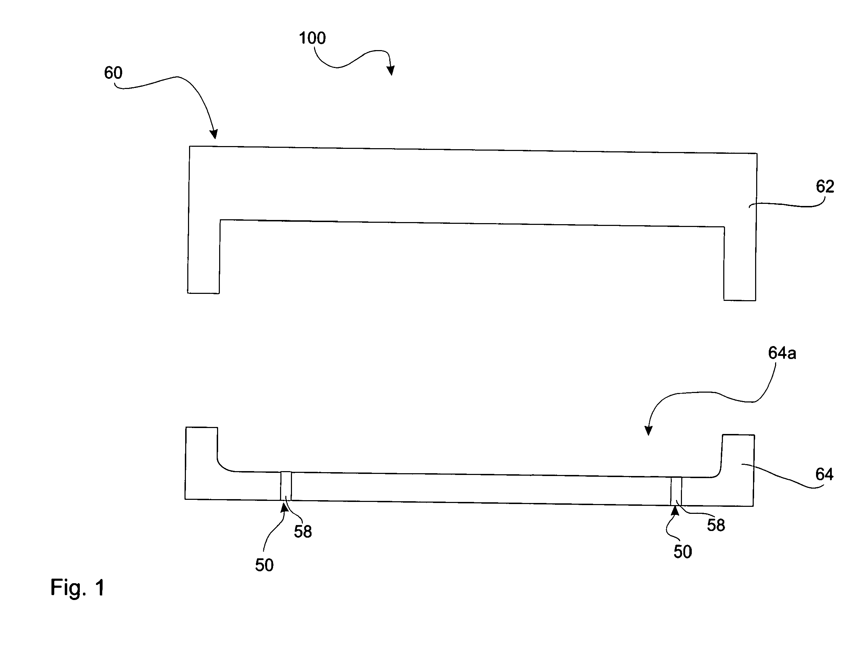

Fig. 1 zeigt eine Werkzeugvorrichtung 60 einer Vorrichtung der vorliegenden Erfindung, bzw. zum ausführen eines erfindungsgemäßen Verfahrens. Diese weist ein erstes Werkzeugteil 62 und ein zweites Werkzeugteil 64 auf. Die beiden Werkzeugteile 62 und 64 sind im Wesentlichen übereinander angeordnet, wobei das zweite Werkzeugteil 64 unterhalb des ersten Werkzeugteils 62 vorgesehen ist. Mit anderen Worten wirkt die Schwerkraftrichtung in Fig. 1 nach unten, so dass die als Vertiefung ausgeformte Trennschichtaufnahme 64a mit Hilfe der Schwerkraft mit einer Trennschicht 20 bestückt werden kann. Darüber hinaus ist in der Werkzeugvorrichtung 60 eine Schäumvorrichtung 50 vorgesehen, die sich in der Darstellung gemäß Fig. 1 durch zwei Kanäle 58 der Schäumvorrichtung im zweiten Werkzeugteil 64 darstellt. Die Darstellung in Fig. 1 zeigt die Ausgangssituation einer erfindungsgemäßen Vorrichtung 100, bzw. vor Beginn der Ausführung eines erfindungsgemäßen Verfahrens.

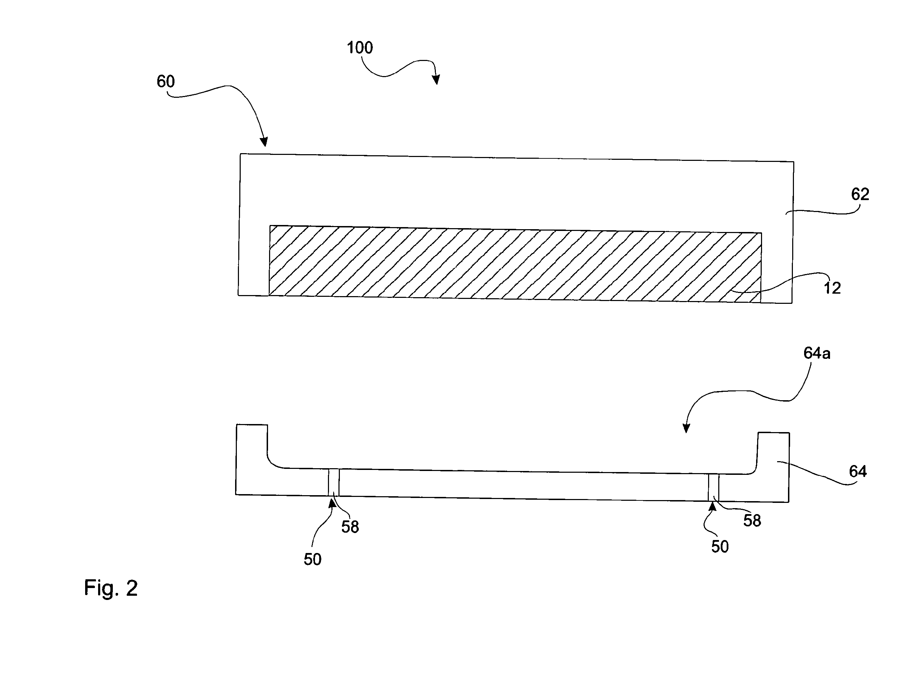

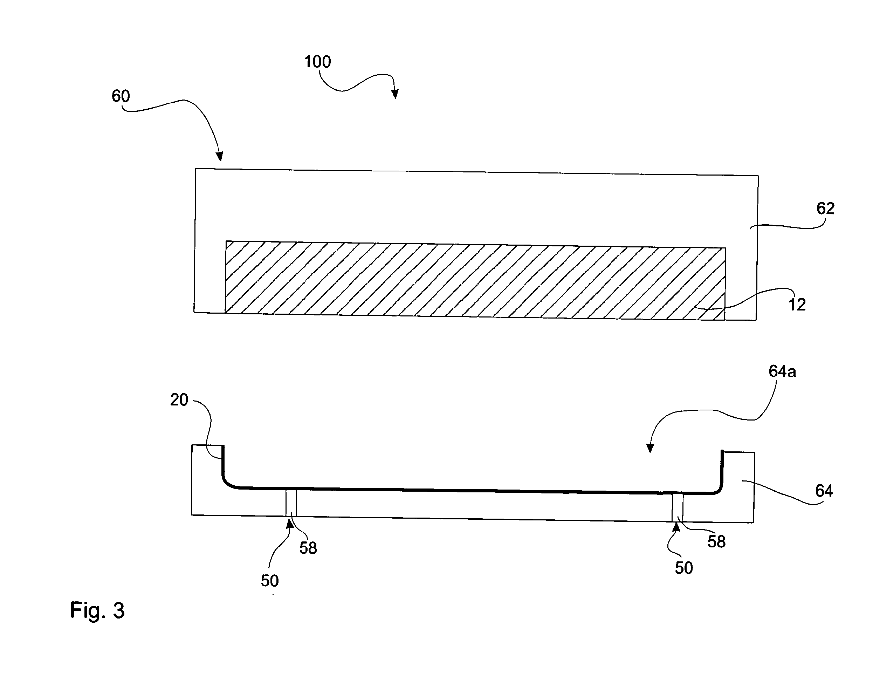

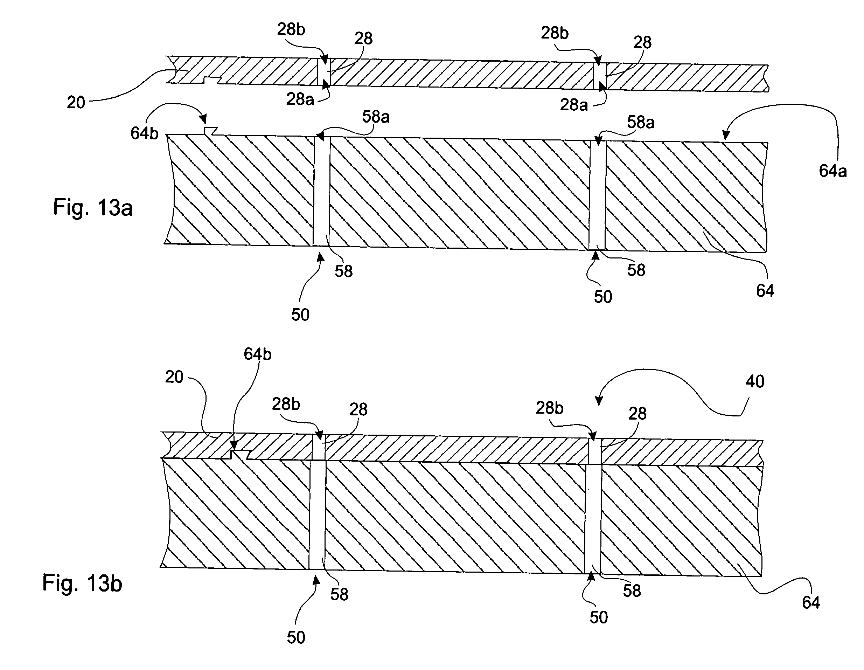

In Fig. 2 ist der erste Schritt eines derartigen Verfahrens dargestellt. In die Werkzeugvorrichtung 60, insbesondere in das erste Werkzeugteil 62 wurde hier eine Trägerschicht 12 aufgenommen. Diese passt im Wesentlichen formschlüssig in eine Vertiefung im ersten Werkzeugteil 62 und kann vorteilhafterweise durch nicht näher dargestellte Vakuumabsaugungen über Kanäle in dieser Position entgegen der Schwerkraftrichtung nach unten gehalten werden. Die Trennschichtaufnahme 64a des zweiten Werkzeugteils 64 ist noch nicht bestückt. Dies erfolgt wie nachfolgend in Fig. 3 dargestellt. Dort ist, im Vergleich zu Fig. 2 die Trennschicht 20 in der Trennschichtaufnahme 64a eingelegt. Wie hier zu erkennen ist, weist die Trennschicht 20 eine Kontur auf, an welche die Kontur der Trennschichtaufnahme 64a im Wesentlichen vollständig angepasst ist. Mit anderen Worten konnte die Trennschicht 20 mittels der Schwerkraft in die Position, wie in Fig. 3 dargestellt, eingesetzt werden. Nicht näher dargestellt ist die Korrelation von Kanälen 28 in der Trennschicht 20 und den Kanälen 58 der Schäumvorrichtung 50, wie sie später noch mit Bezug auf die Fig. 13A und 13B ausführlich erläutert werden soll.

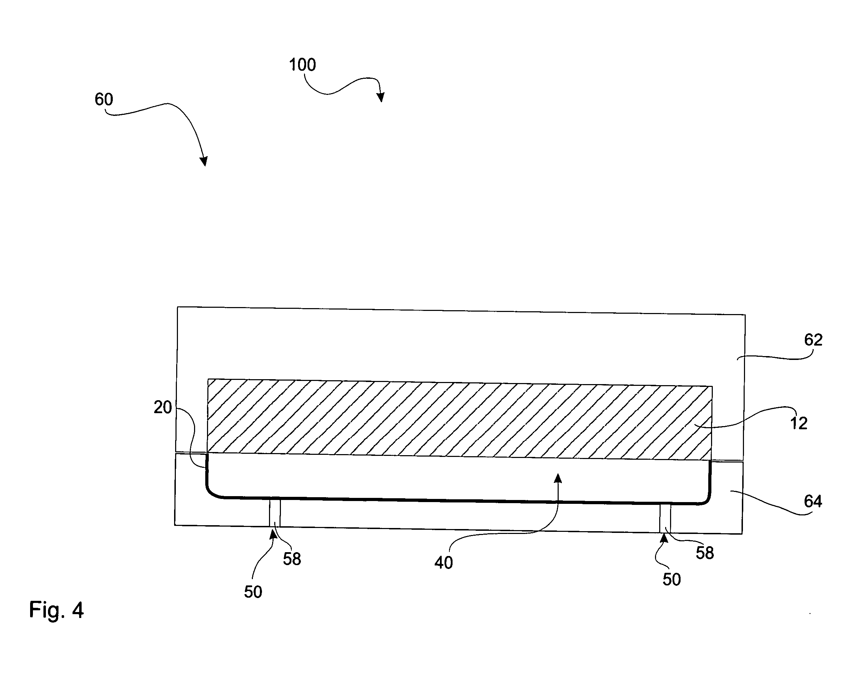

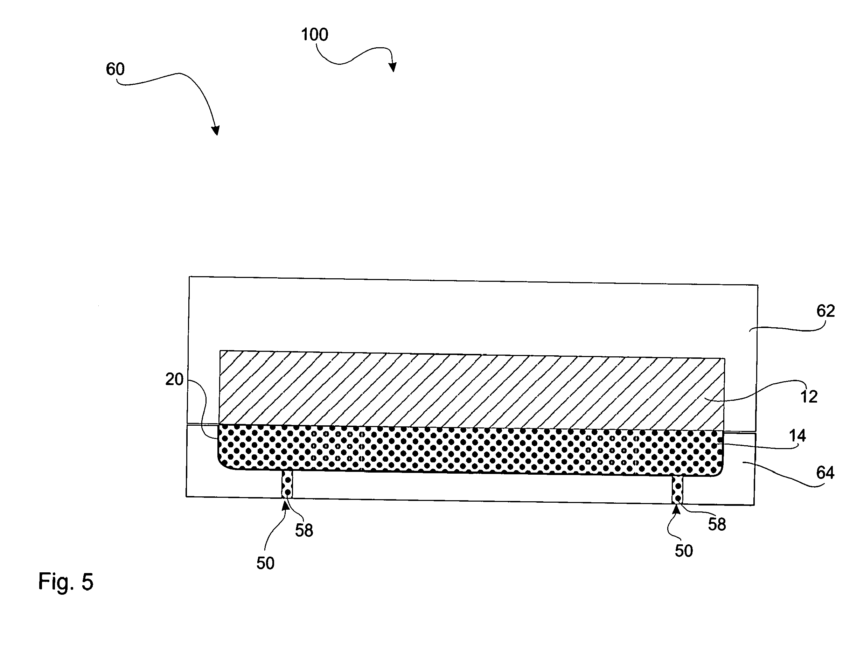

Die Darstellung in Fig. 3 zeigt die Werkzeugvorrichtung 60 in geöffneter Position, also mit auseinandergefahrenen Werkzeugteilen 62 und 64. Anschließend werden diese beiden Werkzeugteile 62 und 64 zusammengefahren, so dass ein geschlossener Zustand der Werkzeugvorrichtung 60 entsteht. Dieser geschlossene Zustand der Werkzeugvorrichtung 60 ist beispielsweise in Fig. 4 dargestellt. Dabei schließt in geschlossenem Zustand der Werkzeugvorrichtung 60 die Trennschicht 20 vorteilhafterweise am linken und rechten Ende in Fig. 4 an der Trägerschicht 12 an. Somit ergibt sich eine im Wesentlichen geschlossene Kavität 40, die zwischen der Trennschicht 20 und der Trägerschicht 12 ausgebildet ist. In Fig. 4, also dem Zustand vor dem Schäumen in die Kavität 40, ist diese noch mit Luft gefüllt. Dieser Luftraum der Kavität 40 wird anschließend nahezu vollständig mit einer Schaumschicht 14 gefüllt. Dieses Füllen mit einer Schaumschicht erfolgt über die Schäumvorrichtung 50 und kann beispielsweise mittels mehrerer Komponenten erfolgen, die in einer chemischen Reaktion Gas erzeugen, so dass ein Aufschäumen der Komponenten in der Kavität 40 erfolgt. Auch das Einspritzen von Schaummaterial unter Zuhilfenahme von Treibgas zur Erzeugung von Schaumporen ist dabei denkbar. Den Abschluss des Schaumvorgangs sieht man in Fig. 5. Hier wurde eine Schaumschicht 14 in der vorher dargestellten Kavität 40 zwischen der Trennschicht 20 und der Trägerschicht 12 erzeugt. Vorteilhafterweise ist dabei, wenn der Schäumvorgang unter erhöhter Temperatur durchgeführt wird, so dass ein Form- und/oder Materialschluss zwischen der Schaumschicht 14 und der Trägerschicht 12 erfolgen konnte, der zu einer unlösbaren Verbindung der beiden Schichten 12 und 14 führte. Unter unlösbare Verbindung ist dabei zu verstehen, dass die Lösekraft für eine solche lösbare Verbindung oberhalb, insbesondere mit Sicherheitsabstand oberhalb den zu erwartenden Kräften des herzustellenden Dekorteils 10 in dessen Einsatzsituation liegt.

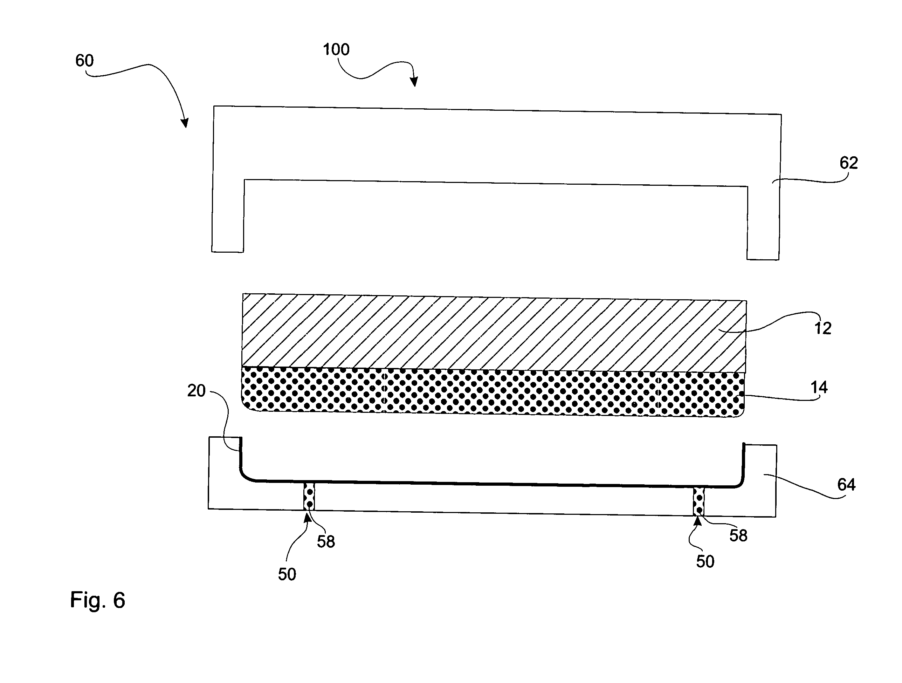

Nach dem Aushärten der Schaumschicht 14 muss das Halbzeug, bestehend aus Trägerschicht 12 und damit unlösbar verbundener Trennschicht 14 aus der Werkzeugvorrichtung 60 entformt werden. Dafür bewegen sich die beiden Werkzeugteile 62 und 64 in die geöffnete Position der Werkzeugvorrichtung 60, wie dies in Fig. 6 dargestellt ist. Das Entnehmen der Trägerschicht 12 und der damit unlösbar verbundenen Schaumschicht 14 kann auf zwei Weisen erfolgen. Für den Fall, dass die Lösekraft der lösbaren Verbindung zwischen Trennschicht 20 und Schaumschicht 14 kleiner oder gleich der Gewichtskraft der Trennschicht 12 ist, findet das Entformen gemäß Fig. 6 statt. Die Trennschicht 12 wird angehoben, womit die damit unlösbar verbundene Schaumschicht 14 mit angehoben wird. Aufgrund der wirkenden Schwerkraft und der Gewichtskraft der Trennschicht 20 verbleibt diese in der Trennschichtaufnahme 64a des zweiten Werkzeugteils 64, so dass das Entformen vollständig erfolgen konnte und die Trägerschicht 12 und die damit unlösbar verbundene Schaumschicht 14 entnommen werden kann.

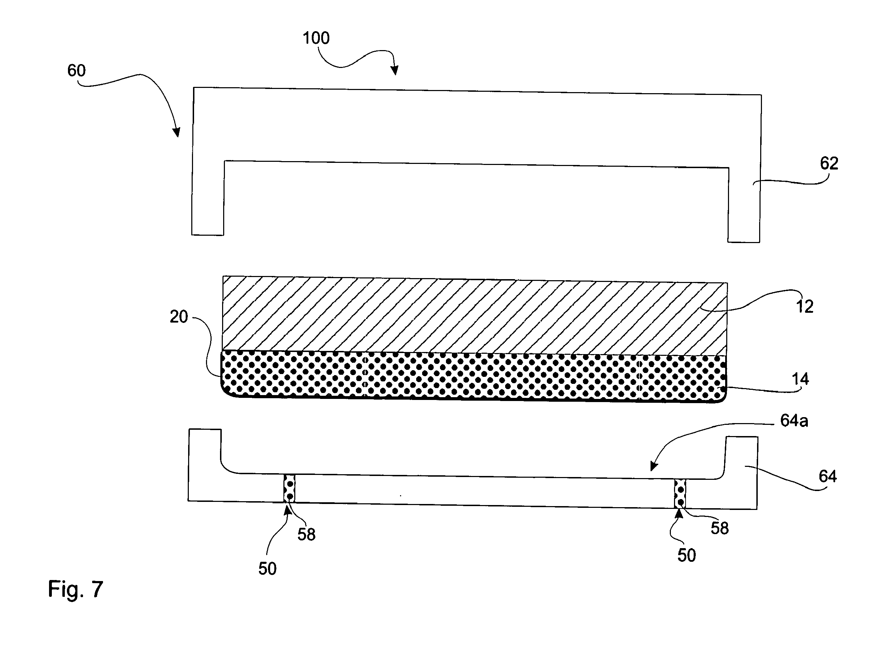

Für den Fall, dass die Lösekraft für die lösbare Verbindung zwischen Trennschicht 20 und Schaumschicht 14 größer als die durch die Schwerkraft aufgebrachte Gewichtskraft der Trennschicht 20 ist, verbleibt diese lösbar verbunden an der Schaumschicht 14 und wird mit aus dem zweiten Werkzeugteil 64, insbesondere aus der Trennschichtaufnahme 64b herausgenommen, wie dies im Endzustand in Fig. 7 dargestellt ist. Bei dieser Variante muss vor dem anschließenden Kaschierschritt die Trennschicht 20 noch von der Schaumschicht 14 entfernt werden und vorteilhafterweise zur Vorbereitung eines nächsten Produktionsschrittes wieder in der Trennschichtaufnahme 64b des zweiten Werkzeugteils 64 angeordnet werden. Für das weitere Vorgehen, also das Kaschieren, steht in jedem Fall ein Halbzeug zur Verfügung, welches aus der Trägerschicht 12 und der damit unlösbar verbundenen Schaumschicht 14 besteht.

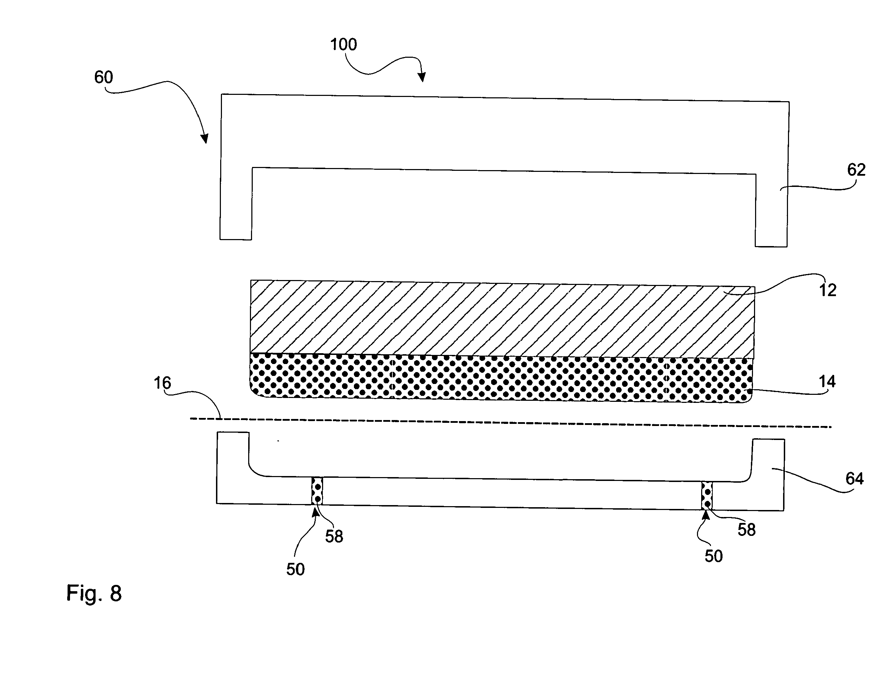

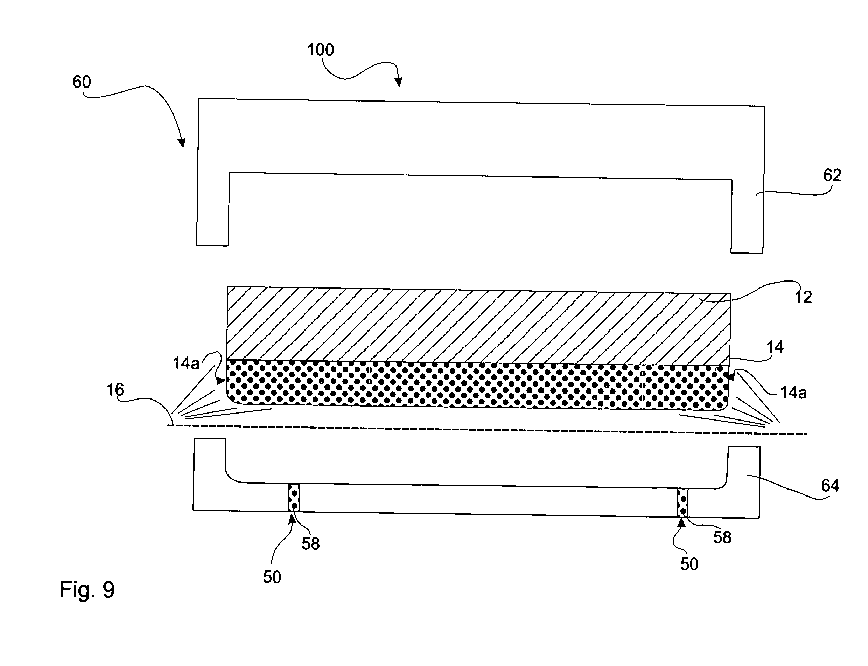

Der nachfolgende Schritt ist das Kaschieren der Schaumschicht 14 in direkter Weise. Dies kann sowohl in einem separaten Werkzeug erfolgen, wie auch in der bereits verwendeten Werkzeugvorrichtung der vorangehenden Schritte. Anhand von Fig. 8 ist dies unter Verwendung der Werkzeugvorrichtung 60 erläutert. Hier wurde die Trennvorrichtung 20 entweder aus der Trennschichtaufnahme 64b des zweiten Werkzeugteils 64 oder von der lösbaren Verbindung zur Schaumschicht 14 entfernt, und zwischen dem Halbzeug aus Trennschicht 12 und Schaumschicht 14 einerseits und dem zweiten Werkzeugteil 64 andererseits die Dekorschicht 16 gespannt. Die Trennschicht 20 hat dabei eine Abmessung aufgewiesen, welche im Wesentlichen der geometrischen Abmessung der Dekorschicht 16, insbesondere im Bezug auf die jeweilige Dicke entspricht. Nach dem Anordnen der Dekorschicht 16 in einer Weise, wie sie in Fig. 8 dargestellt ist, kann optional ein Härtungsschritt erfolgen. Dieser Härtungsschritt ist anhand von Linien in den beiden Randabschnitten 14a der Schaumschicht 14 in Fig. 9 dargestellt. Der Randabschnitt 14a, der bei dieser Ausführungsform im Wesentlichen der Dicke der Schaumschicht 14 entspricht, erfolgt durch das Aufbringen, beispielsweise per Sprühen eines flüssigen Härtungsmittels, beispielsweise eines aushärtbaren Harzes. Dieses zieht in die Schaumschicht 14 und versteift somit die Randabschnitte 14a der Schaumschicht 14. Mit anderen Worten wird auf diese Weise die Widerstandskraft gegen Druckkräfte der Schaumschicht 14 in diesen Randabschnitten 14a erhöht. Dieser Schritt ist optional und dient dazu, die im folgenden Schritt auftretenden Kaschierkräfte in den Randabschnitten 14a besser auffangen zu können, um eine gleichmäßigere Dicke des herzustellenden Dekorteils 10 zu erzeugen.

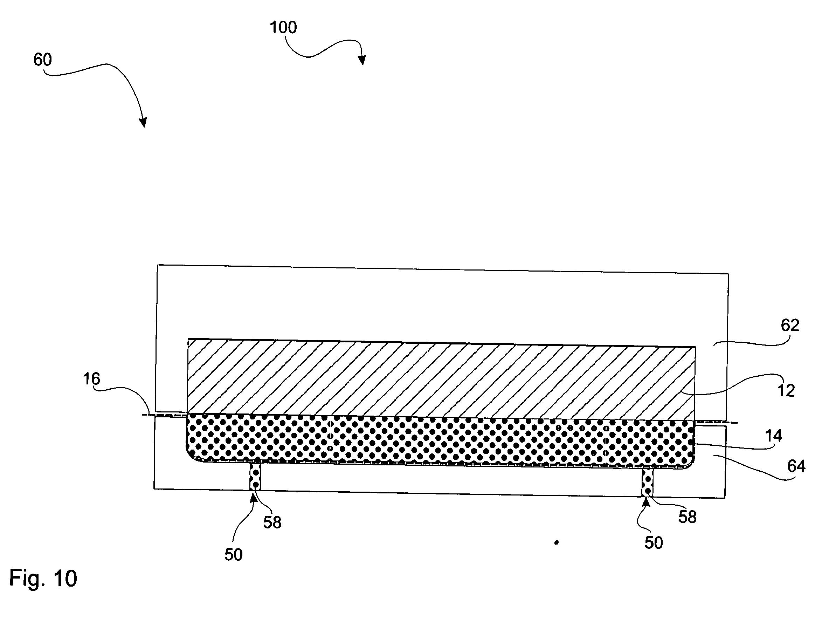

Nach dem optionalen Schritt der Fig. 9 bzw. nach dem Schritt in Fig. 8, werden die beiden Werkzeugteile 62 und 64 wieder in die geschlossene Position verfahren wie dies in Fig. 10 dargestellt ist. Durch dieses Bewegen wird durch die Schaumschicht 14 die Dekorschicht 16 in die Trennschichtaufnahme 64a des zweiten Werkzeugteils 64 hineingeschoben. Dabei wird die Dekorschicht 16 verformt und legt sich in den Spalt zwischen der Schaumschicht 14 und dem zweiten Werkzeugteil 64. Durch die Korrelation der Abmessungen der Trennschicht 20 mit den Abmessungen der Dekorschicht 15 ist in diesem Spalt Platz für die Dekorschicht 16, so dass ein definiertes Anordnen der Dekorschicht 16, vorteilhafterweise mit definiertem Aufbringen eine Kaschierdrucks, erfolgen kann. Vorteilhafterweise ist dieser Vorgang unter erhöhter Temperatur durchzuführen, so dass ein Material- und/oder Formschluss zur kraftschlüssigen und damit unlösbaren Verbindung zwischen der Dekorschicht 16 und der Schaumschicht 14 erfolgen kann. Alternativ ist es auch möglich, die Schaumschicht 14 und/oder die Dekorschicht 16 auf den jeweils zueinander zeigenden Seiten der jeweiligen Schicht 14 und 16 mit einem Haftvermittler, also einem Klebstoff, zu verstehen. In einem solchen Fall kann eine erhöhte Temperatur jedoch trotzdem sinnvoll sein, um die Kleberverbindung zu verbessern.

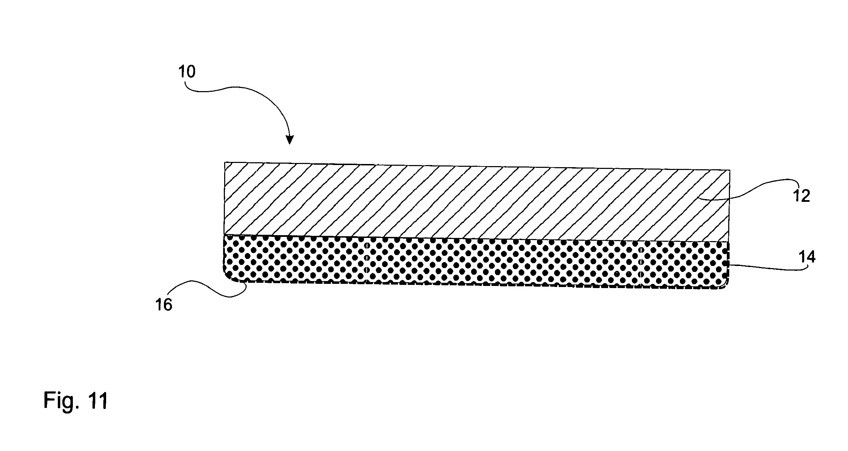

An den Kaschierschritt anschließend, unabhängig davon, ob er in einem separaten Werkzeug oder in der Werkzeugvorrichtung 60 durchgeführt worden ist, wird das fertiggestellte Dekorteil entformt wie es in Fig. 11 abschließend dargestellt ist. Das fertige Dekorteil 10 weist somit eine Trägerschicht 12 und eine damit unlösbar verbundene Schaumschicht 14 und eine direkt damit ebenfalls unlösbar verbundene Dekorschicht 16 auf. Die Dekorschicht 16 ist dabei vorteilhafterweise zum Teil aus Leder oder Lederimitat ausgeführt. Bei einigen Ausführung ist es denkbar, dass die Dekorschicht 16 selbst aus mehreren Schichten besteht, wobei die äußerste Schicht zur Dekorierung des Dekorteils 10 dient und vorteilhafterweise aus Leder oder Lederimitat ausgebildet ist.

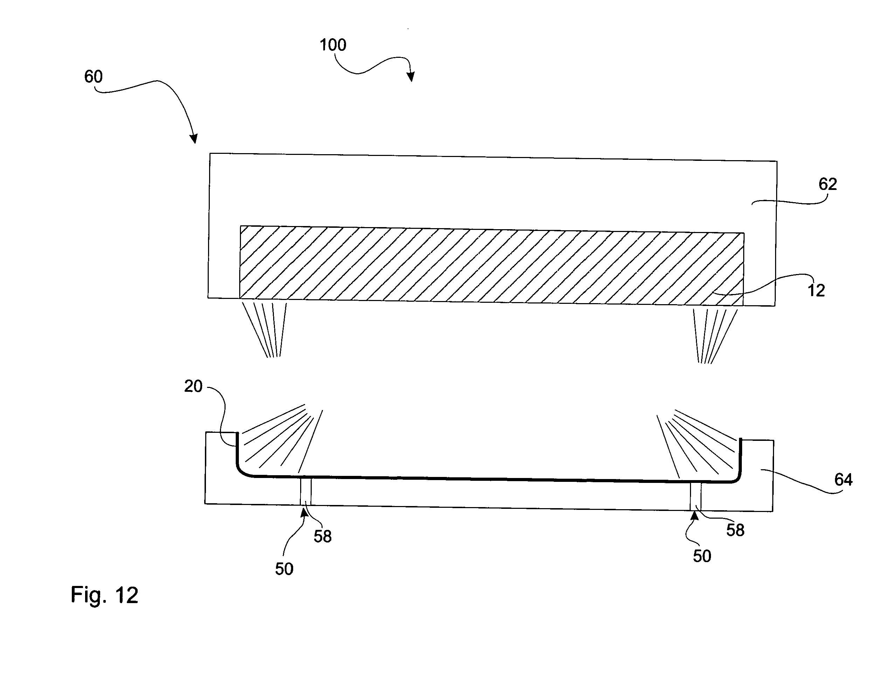

Fig. 12 zeigt eine Alternative zur Behandlung der Randabschnitte 14a der Schaumschicht 14 mit einem Härtungsmittel. Diese erfolgt hier nicht nach dem Schaumprozess sondern vor dem Schaumprozess. So wird hier, ebenfalls anhand von Linien in den entsprechenden am Rand gelegenen Abschnitten der Trägerschicht 12 und der Trennschicht 20 dargestellt, ein Härtungsmittel in den jeweiligen Bereich aufgebracht. Dies kann an beiden Schichten oder auch nur an der Trägerschicht oder nur der Trennschicht 20 erfolgen. Während des anschließenden Schäumprozesses, wie er beispielsweise in Fig. 5 dargestellt ist, kann das aufgebrachte Härtungsmittel in die Schaumschicht 14 eindringen und ein nachfolgender separater Behandlungsschritt der Schaumschicht 14 unterbleiben. Auch ist es möglich, dass Volumen verdrängende Härtungsmittel zum Einsatz kommen, die Leervolumen der Kavität in den gewünschten Abschnitten ausfüllen und damit ein Ausschäumen dieser Bereiche nicht mehr zulassen. Die Funktionsweise ist jedoch grundsätzlich identisch, so dass auf diese Weise einzelne Abschnitte, insbesondere die Randabschnitte 14a der Schaumschicht 14 ausgehärtet werden können und damit die Widerstandskraft gegen Druckkräfte erhöht wird.

Die Fig. 13A und 13B zeigen zwei Zustände beim Einsetzen einer Trennschicht 20 in die Trennschichtaufnahme 64a des zweiten Werkzeugteils 64. In Fig. 13A ist der Zustand vor dem Einsetzen der Trennschicht 20 dargestellt. Im Querschnitt ist eine Korrelation mit einer Fixiervorrichtung 64b dargestellt, welche hier als Schnapprastverbindung ausgebildet ist. Diese ist einmalig vorgesehen, kann jedoch auch an einer Vielzahl von Stellen vorgesehen sein, um eine besonders gute Fixierung der Trennschicht 20 in der Trennschichtaufnahme 64a des zweiten Werkzeugteils 64 zu ermöglichen. Wird die Trennschicht 20 gemäß Fig. 13A in die Trennschichtaufnahme 64a eingesetzt, so rastet die Fixiervorrichtung 64b in einer damit korrelierenden Vertiefung der Trennschicht 20 ein, wie dies in Fig. 13B gezeigt ist. Durch die Ausbildung der Trennschicht 20 aus flexiblem Material ist eine reversible Fixierung erfolgt, so dass ohne weiteres die Trennschicht 20 gegenüber Windung der elastischen Materialkräfte von der Fixiervorrichtung 64b auch wieder entfernt werden kann.

Weiter ist in den Ausschnitten der Querschnitte der Fig. 13A und 13B die Korrelation der Kanäle 28 in der Trennschicht und der Kanäle 58 der Schäumvorrichtung 50 im zweiten Werkzeugteil 64 zu erkennen. So weisen die Kanäle 28 in der Trennschicht zwei Öffnungen 28a und 28b auf, wobei wenigstens eine Öffnung 28b sich zur Kavität 40 öffnet. Die andere Öffnung 28a zeigt in Richtung der Trennschichtaufnahme 64a und legt sich beim Einsetzen der Trennschicht 20 in die Trennschichtaufnahme 64a in fluidkommunizierender Weise an das zweite Werkzeugteil 64 an, so dass die Öffnung 58b des Kanals 58 der Schäumvorrichtung 50 in fluidkommunizierender Verbindung mit der Öffnung 28a des Kanals 28 in der Trennschicht 20 steht. Auf diese Weise kann aus der Schäumvorrichtung 50 über den Kanal 58 durch die Fluidkommunikation der Öffnungen 58a und 28a über den Kanal 28 in der Trennschicht 20 durch die Öffnung 28b in der Trennschicht 20 Schäummaterial in die Kavität 40 eingebracht und die Schaumschicht 14 erzeugt werden.

Es ist selbstverständlich, dass die vorstehend erläuterten Ausführungsformen nur beispielhaft zu verstehen sind. So ist es möglich, dass die einzelnen Details, sofern technisch sinnvoll, frei miteinander kombinierbar sind, ohne den Rahmen der vorliegenden Erfindung zu verlassen.

### Bezugszeichenliste

- 10: Dekorteil
- 12: Trägerschicht
- 14: Schaumschicht
- 14a: Randabschnitt der Schaumschicht
- 16: Dekorschicht
- 20: Trennschicht
- 28: Kanal in der Trennschicht
- 28a: Öffnung des Kanals in der Trennschicht
- 28b: Öffnung des Kanals in der Trennschicht
- 40: Kavität
- 50: Schäumvorrichtung
- 58: Kanal der Schäumvorrichtung
- 58: Öffnung des Kanals der Schäumvorrichtung
- 60: Werkzeugvorrichtung
- 62: erstes Werkzeugteil
- 64: zweites Werkzeugteil
- 64a: Trennschichtaufnahme
- 64b: Fixiervorrichtung
- 100: Vorrichtung

## Patentansprüche

1. Verfahren zum Herstellen eines Dekorteils (10) mit einer Trägerschicht (12), einer Schaumschicht (14) und einer Dekorschicht (16), aufweisend die folgenden Schritte:
■ Anordnen einer Trägerschicht (12) in einem ersten Werkzeugteil (62) einer Werkzeugvorrichtung (60),
■ Vorsehen einer Trennschicht (20) in einer Trennschichtaufnahme (64a) eines zweiten Werkzeugteils (64) der Werkzeugvorrichtung (60),
■ Schließen der beiden Werkzeugteile (62, 64) der Werkzeugvorrichtung (60) derart, dass sich zwischen der Trennschicht (20) und der Trägerschicht (12) zumindest abschnittsweise eine Kavität (40) ausbildet,
■ Erzeugen einer Schaumschicht (14) in der Kavität (40) mittels einer Schäumvorrichtung (50), wobei die Materialien der Schaumschicht (14) und der Trennschicht (20) derart ausgebildet sind, dass zwischen der Trennschicht (20) und der Schaumschicht (14) eine lösbare Verbindung ausgebildet wird,
■ Öffnen der beiden Werkzeugteile (62, 64) der Werkzeugvorrichtung (60), **gekennzeichnet durch**:
■ Entnehmen der Trennschicht (20) aus der Trennschichtaufnahme (64a) des zweiten Werkzeugs (64) oder Lösen der Trennschicht (20) von der Schaumschicht (14),
■ Spannen der Dekorschicht (16) zwischen die beiden Werkzeugteile (62, 64) der Werkzeugvorrichtung (60), und
■ direktes Kaschieren der Schaumschicht (14) mit der Dekorschicht (16), indem die beiden Werkzeugteile (62, 64) in die geschlossene Position verfahren werden, wobei die Dekorschicht (16) den Platz der Trennschicht (20), deren Abmessungen zumindest abschnittsweise den Abmessungen der zu erzeugenden Dekorschicht (16) entsprechen, einnimmt.

2. Verfahren nach Anspruch 1, **dadurch gekennzeichnet, dass** vor dem Schritt des Kaschierens der folgende Schritt vorgesehen ist: wenigstens abschnittsweises Behandeln der Schaumschicht (14) mit einem Härtungsmittel und/oder dass vor dem Erzeugen der Schaumschicht (14) der folgende Schritt vorgesehen ist: Behandeln der Trennschicht (20) und/oder der Trägerschicht (12) zumindest abschnittsweise mit dem Härtungsmittel.

3. Verfahren nach Anspruch 2, **dadurch gekennzeichnet, dass** die Behandlung mit Härtungsmittel in einem oder für einen Randabschnitt (14a) der Schaumschicht (14), erfolgt.

4. Verfahren nach einem der vorangegangenen Ansprüche, **dadurch gekennzeichnet, dass** die verwendete Trennschicht (20) zumindest in den zu der zwischen Trennschicht (20) und Trägerschicht (12) gebildeten Kavität (40) gerichteten Abschnitten wenigstens teilweise aus Silikon besteht und/oder dass die verwendete Trennschicht (20) form- und temperaturbeständig ist bis mindestens zu einer Temperatur von zumindest 10°C oberhalb der Temperatur beim Durchführen des Verfahrens.

5. Verfahren nach einem der vorangegangenen Ansprüche, **dadurch gekennzeichnet, dass** die verwendete Trennschicht (20) zumindest einen Kanal (28) mit zumindest zwei Öffnungen (28a, 28b) aufweist, wobei wenigstens eine Öffnung (28b) den Kanal (28) zu der Kavität (40) zwischen der Trennschicht (20) und der Trägerschicht (12) öffnet und wenigstens eine weitere Öffnung (28a) den fluidkommunizierenden Kontakt zwischen dem Kanal (28) der Trennschicht (20) und einem Kanal (58) der Schäumvorrichtung (50) herstellt und/oder dass die verwendete Trennschicht (20) eine Oberflächenstruktur aufweist, die mit einer gewünschten Oberflächenstruktur auf der Dekorschicht (16) des fertigen Dekorteils (10) korrespondiert.

6. Vorrichtung (100) für die Herstellung eines Dekorteils (10) mit einer Trägerschicht (12), einer Schaumschicht (14) und einer Dekorschicht (16) zur Verwendung in einem Fahrzeug, die Vorrichtung aufweisend:
■ eine Werkzeugvorrichtung (60) mit zumindest einem ersten Werkzeugteil (62), das derart ausgestaltet ist, dass darin die Trägerschicht (12) aufgenommen werden kann und zumindest einem zweiten Werkzeugteil (64), in dem wenigstens eine als Vertiefung geformte Trennschichtaufnahme (64a) zur Anordnung einer Trennschicht (20) vorgesehen ist, wobei das erste Werkzeugteil (62) und das zweite Werkzeugteil (64) zueinander bewegbar sind zwischen einer geöffneten Position zum Anordnen der Trägerschicht (20) in dem ersten Werkzeugteil (62) und der Trennschicht (20) in der Trennschichtaufnahme (64a) des zweiten Werkzeugteils (64) und einer geschlossenen Position, in welcher zwischen der Trägerschicht (12) und der Trennschicht (20) zumindest abschnittsweise eine Kavität (40) zur Ausbildung der Schaumschicht (14) ausgebildet wird, und
■ eine Schäumvorrichtung (50), die derart ausgestaltet ist, dass sie bei geschlossener Position der beiden Werkzeugteile (62, 64) der Werkzeugvorrichtung (60) die Schaumschicht (14) in der Kavität (40) erzeugen kann,
**dadurch gekennzeichnet,**
**dass** die Abmessungen der Trennschichtaufnahme (64a) derart ausgestaltet sind, dass die Trennschicht (20) aufgenommen werden kann und die Abmessungen der Trennschicht (20) zumindest abschnittsweise den Abmessungen der zu erzeugenden Dekorschicht (16) entsprechen, so dass nach dem Erzeugen der Schaumschicht (14) die Trennschicht (20) entfernt, anschließend zwischen die beiden Werkzeugteile (62, 64) der Werkzeugvorrichtung (60) die Dekorschicht (16) gespannt und mit der Vorrichtung (100) die Schaumschicht (14) direkt kaschiert werden kann, indem die Dekorschicht (16) in der geschlossenen Position der beiden Werkzeugteile (62, 64) den Platz der Trennschicht (20) einnimmt.

7. Vorrichtung (100) nach dem Anspruch 9, **dadurch gekennzeichnet, dass** die Schäumvorrichtung (50) zumindest einen Kanal (58) in der Werkzeugvorrichtung (60) und wenigstens eine damit in fluidkommunizierender Verbindung stehende Öffnung (58a) für den Transport des Schaummaterials zu der Kavität (40) aufweist und/oder dass die Trennschichtaufnahme (64a) mit einer Fixiervorrichtung (64b) für die reversible Fixierung der Trennschicht (20) in der Trennschichtaufnahme (64a) ausgestattet ist.

8. Vorrichtung nach einem der Ansprüche 6 bis 7, **dadurch gekennzeichnet, dass** die Oberfläche der Trennschichtaufnahme (64a) zumindest abschnittsweise derart ausgebildet ist, dass mittels Klebstoff die Trennschicht (20) an dieser Oberfläche reversibel fixiert werden kann und der Klebstoff von dieser Oberfläche wieder entfernbar ist.

9. Dekorteil (10) aufweisend eine Trägerschicht (12), eine mit dieser verbundene Schaumschicht (14) und eine darauf angeordnete Dekorschicht (16), insbesondere mit einer äußersten Schicht aus Leder oder Lederimitat, wobei die Dekorschicht (16) in den Randabschnitten (14a) der Schaumschicht (14) auf die Rückseite der Trägerschicht (12) mittels eines umgebugten Dekorschichtrandabschnitts befestigt ist, **dadurch gekennzeichnet, dass** Randabschnitte (14a) der Schaumschicht (14) mit einem Härtungsmittel zum Aufnehmen von Kaschierkräften bei Anbringung der Dekorschicht (16) für eine gleichmäßige Dicke des herzustellenden Dekorteils (10) behandelt sind.

10. Dekorteil (10) nach Anspruch 9, **dadurch gekennzeichnet, dass** es sich bei dem Härtungsmittel um eine in den Poren der Schaumschicht (14) aushärtbare Flüssigkeit oder um eine sich um die Schaumschicht (14) legende aushärtbare Härtungsschicht handelt.
